**Europäisches Patentamt**

(19) **European Patent Office**

**Office européen des brevets**

(11) Veröffentlichungsnummer: **0 257 236**
**B1**

(12) # EUROPÄISCHE PATENTSCHRIFT

(45) Veröffentlichungstag der Patentschrift:
26.07.89

(51) Int. Cl.⁴: **F01N 3/00,** F01N 1/08

(21) Anmeldenummer: **87109281.3**

(22) Anmeldetag: **27.06.87**

(54) **Abgasschalldämpfer.**

(30) Priorität: **08.08.86 DE 3626991**

(43) Veröffentlichungstag der Anmeldung:
**02.03.88 Patentblatt 88/9**

(45) Bekanntmachung des Hinweises auf die Patenterteilung:
**26.07.89 Patentblatt 89/30**

(84) Benannte Vertragsstaaten:
**AT ES FR GB IT SE**

(56) Entgegenhaltungen:
**DE-A- 3 529 010**

(73) Patentinhaber: **Leistritz Aktiengesellschaft,
Markgrafenstrasse 29-39, D-8500 Nürnberg(DE)**

(72) Erfinder: **Zachmann, Alfons,
Dr.-Konrad-Adenauer-Strasse 31,, D-8510 Fuerth(DE)**
Erfinder: **Ermer, Hermann, Thaeterstrasse 46,,
D-8500 Nuernberg(DE)**

(74) Vertreter: **Czowalla . Matschkur Patentanwälte,
Dr.-Kurt-Schumacher-Strasse 23 Postfach 9109,
D-8500 Nürnberg 11(DE)**

## Beschreibung

Die Erfindung bezieht sich auf einen Abgasschalldämpfer mit einem mehrgeteilten, die Schalldämpferkammern im Schalldämpfergehäuse durchsetzenden Abgasrohr, dessen in das Schalldämpfergehäuse einmündende Teil über eine Vielzahl von Bohrungen mit den Schalldämpferkammern und über seine Austrittsöffnung mit der hinteren Endkammer in Verbindung steht, dessen mittlerer Teil (Rückführrohr 2) den Gasstrom von der hinteren Endkammer rückführend in die vordere Endkammer umlenkt und dessen aus dem Schalldämpfergehäuse herausführende Teil in wenigstens einer Schalldämpferkammer eine Düse enthält, die über eine Saugöffnung mit der Kondensatsammlung auf der Bodenseite des Schalldämpfergehäuses verbunden ist.

Bei dem nach der deutschen Patentschrift DE-HC 3 241 887 bekanntgewordenen Abgasschalldämpfer der vorstehend beschriebenen Art ist das aus dem Schalldämpfergehäuse herausführende Abgasrohr nahe dem bodenseitigen Kondensatsammelbereich angeordnet und kann über an dem Abgasrohr angebrachten Saugöffnungen mittels Düsen das anfallende Kondensat ansaugen, mitreißen und über den Auspuff auswerfen. Diese im Betrieb schon außerordentlich bewährte Ausführungsform hat den Nachteil, daß das sich im Fall eines schrägen Einbaus des Abgasschalldämpfers im Bereich einer Stirnwand – insbesondere der Endstirnwand – vermehrt angesammelte Kondensat nicht oder nicht vollständig aus der Ecke von dem Abgasrohr aufgenommen werden kann. Diesem Mißstand wird in der Konstruktion nach der deutschen Anmeldeschrift DE 3 526 609 abgeholfen, indem im Bereich der Endstirnwand das aus dem Schalldämpfergehäuse herausführende Abgasrohr mit einer zusätzlichen Absaugvorrichtung in Form eines Längsschlitzes versehen ist. Es muß allerdings bei dieser Ausführungsform nach wie vor eine hohe Saugleistung zum Abtransport des sich in der wannenartigen Vertiefung in der Ecke der Endstirnwand des Schalldämpfergehäuses angesammelten Kondensats aufgebracht werden. Darüber hinaus kann unter bestimmten klimatischen Verhältnissen und Betriebsbedingungen des Fahrzeugs nach dem Absaugen der Kondensatflüssigkeit an den Gehäusewandungen infolge Adhäsion ein Feuchtefilm haften, der noch korrodierend weiterwirken kann.

Der Erfindung liegt daher die Aufgabe zugrunde, einen Abgasschalldämpfer der eingangs genannten Art so auszugestalten, daß durch eine günstige Führung des Abgasstromes der Feuchtefilm abgedampft und der Korrosionsschutz weiter verbessert wird.

Zur Lösung dieser Aufgabe ist gemäß der vorliegenden Erfindung vorgesehen, daß wenigstens ein Rückführrohr im wesentlichen parallel in der Nähe des aus dem Schalldämpfergehäuse herausführenden bodenseitigen Teils des Abgasrohres angeordnet ist und daß das Rückführrohr in seiner Längsachse eine durchgehende Perforierungslinie aufweist, die dem Bereich der wannenartigen Vertiefung im bodenseitigen Teil des Schalldämpfergehäuses derart zugewandt ist, daß ein Teil des zurückgeführten Gasstromes durch die Perforierungslinie in Richtung des sich an den Saugöffnungen angesammelten Kondensats aus dem Rückführrohr austritt.

Durch die erfindungsgemäße Anordnung des Rückführrohres – im wesentlichen parallel – in der Nähe des aus dem Schalldämpfergehäuse herausführenden bodenseitigen Teiles des Abgasrohres ist eine gerichtete Rückführung des Gases sowie eine gewünschte Erwärmung sowohl des sich in der Nähe befindlichen Kondensats als auch der sich in der Nähe befindlichen bodenseitig angeordneten Außenwand des Schalldämpfergehäuses möglich. Die erfindungsgemäße Ausgestaltung des Rückführrohres, das in seiner Längsachse eine durchgehende Perforierungslinie aufweist, welch dem bodenseitigen Teil des Schalldämpfergehäuses im Bereich der wannenartigen Vertiefung zugewandt ist, ermöglicht auf diese Art und Weise neben einer Trockenlegung eine zumindest teilweise Verdampfung des Kondensats. Dieses sich an den Saugöffnungen angesammelte Kondensat wird nämlich so von einem Teil des zurückgeführten heißen Gasstromes, der durch die Perforierungslinie aus dem Rückführrohr austritt, direkt angeströmt. Der Feuchtefilm, welcher nicht über die erzielte Saugwirkung der vorgesehen Düsen ausgeschieden werden kann und weiterhin auf dem Boden des Abgasschalldämpfers verbleibt, wird erwärmt und kann verdampfen. Ab diesem Moment wird durch das gerichtete Anströmen des Gases im besonderen Maße die bodenseitige Außenwand des Schalldämpfergehäuses erwärmt, so daß neu anfallendes Kondensat auf diese heißen Teile des Schalldämpfergehäuses niederfällt und ebenfalls sofort verdampft. Je nach Einsatz und Erfordernis kann hierbei die Form der Perforierungslinie ohne weiteres - nicht zuletzt aufgrund einer extrem einfachen Fertigung - variiert werden. Dementsprechend kann die Perforierungslinie als durchgehender Schlitz, als in Form einer gestrichelten Linie ausgebildeter Schlitz bzw. als Perforationsreihe von Bohrungen ausgebildet sein.

Des weiteren ist erfindungsgemäß eine Haltenase vorgesehen, um zu gewährleisten, daß die Perforierungslinie des Rückführrohres lagegerecht fixiert wird, damit das durch die Perforierungslinie austretende heiße Gas auch tatsächlich in Richtung des sich an den Saugöffnungen angesammelten Kondensats bzw. Feuchtefilmes strömt. Diese Nase befindet sich jeweils an den Bohrungen der die Schalldämpferkammern be grenzenden Schottwände, durch die das Rückführrohr geschoben wird, und greift direkt in die Perforierungslinie ein.

Schließlich liegt es auch noch im Rahmen der Erfindung, den Abstand zwischen dem Ende des Rückführrohres und der diesem zugewandten, stirnseitig gelegenen Außenwand des Schalldämpfergehäuses zu variieren, womit folglich eine weitere Einstellungsmöglichkeit des Abgasschalldämpfers auf veränderte Erfordernisse besteht. Soll beispielsweise mehr Abgas seitlich austreten, so muß man den Rückstau des Gasstromes vergrößern. Dies geschieht dadurch, indem man den Abstand zwischen dem Ende des Rückführrohres und der diesem zugewandten, stirnseitig gelegenen Außenwand des Schalldämpfergehäuses verkleinert, so daß automatisch mehr Gas durch die Perforierungslinie in Richtung Kondensatsammelbereich gedrückt wird. Damit das Gas hauptsächlich an der Stirnseite des Rückführrohres austreten kann, muß naturgemäß im umgekehrten Fall der Rückstau verkleinert bzw. der oben beschriebene Abstand vergrößert werden.

Die Erfindung soll nachstehend an einem Ausführungsbeispiel sowie anhand der Zeichnung näher erläutert werden. Dabei zeigen:

Fig. 1 einen Längsschnitt durch einen Abgasschalldämpfer mit in verschiedenen Ebenen mäanderförmig geführten Abgasrohr,

Fig. 2 einen Querschnitt durch einen Abgasschalldämpfer gemäß Fig. 1 längs der Linie II-II und

Fig. 3 eine teilweise geschnittene Aufsicht auf einen Abgasschalldämpfer gemäß der Linie III-III in Fig. 2.

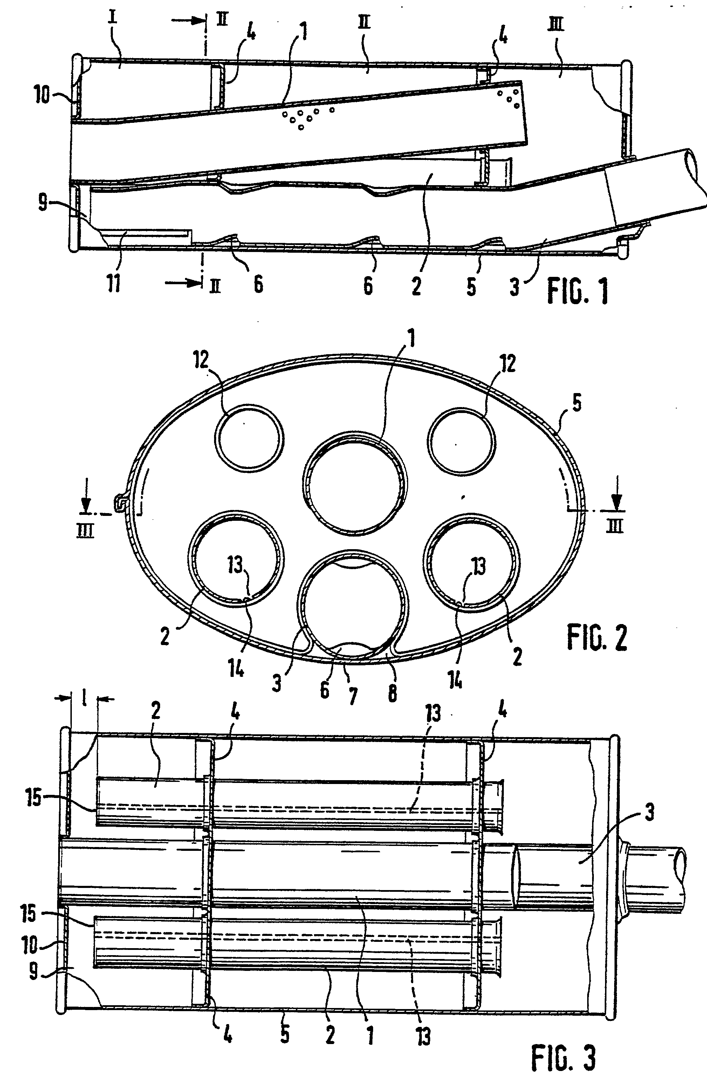

Bei dem in Fig. 1 dargestellten Abgasschalldämpfer ist das Abgasrohr mäanderförmig umgelenkt, wobei die einzelnen Teile 1, 2 und 3 in unterschiedlichen Höhen verlaufen. Der eingangsseitige Teil 1 des Abgasrohres durchdringt die von Schottwänden 4 begrenzten Schalldämpferkammern I, II und III ungefähr in der Mitte des Schalldämpfergehäuses 5. Die zwei Rückführrohre 2 sind - im wesentlichen parallel - in der Nähe des aus dem Schalldämpfergehäuse 5 herausführenden Teiles 3 des Abgasrohres angeordnet. Dieser Teil 3 enthält in wenigstens einer Schalldämpferkammer eine Düse, die über eine unterseitige Saugöffnung 6 das sich auf der Bodenseite des Schalldämpfergehäuse angesammelte Kondensat ansaugt, mitreißt und über den Auspuff auswirft. Im Ausführungsbeispiel nach Fig. 1 stehen die Schalldämpferkammern I, II und III bodenseitig durch entsprechende Ausnehmungen 8 der Schottwände 4 miteinander in Verbindung. Bei Schräglage des Schalldämpfergehäuses kann sich das Kondensat in dem Bereich der wannenartigen Vertiefung 7 der Ecke 9 ansammeln. Für diesen Fall ist in dem Teil 3 des Abgasrohres ein bis zur Stirnwand 10 des Gehäuses reichender Längsschlitz 11 vorgesehen, um so eine höhere Auswurfskapazität zu erreichen. Des weiteren können die Schottwände 4 mit Bohrungen 12 versehen sein.

Fig. 2 zeigt eine zur lagegerechten Fixierung der Perforierungslinie 13 angeordnete Haltenase 14, die in die Perforierungslinie 13 eingreift.

In Fig. 3 ist der variierbare Abstand 1 zwischen dem Ende 15 des Rückführrohres 2 und der Außenwand 11 des Schalldämpfergehäuses, über den der Rückstau des Gasstromes regelbar ist, dargestellt.

## Patentansprüche

1. Abgasschalldämpfer mit einem mehrgeteilten, die Schalldämpferkammern (I, II, III) im Schalldämpfergehäuse durchsetzenden Abgasrohr (1, 2, 3), dessen in das Schalldämpfergehäuse (5) einmündende Teil (1) über eine Vielzahl von Bohrungen mit den Schalldämpferkammern (I, II, III) und über seine Austrittsöffnung mit der hinteren Endkammer (III) in Verbindung steht, dessen mittlerer Teil (Rückführrohr 2) den Gasstrom von der hinteren Endkammer (III) rückführend in die vordere Endkammer (I) umlenkt und dessen aus dem Schalldämpfergehäuse herausführende Teil (3) in wenigstens einer Schalldämpferkammer (I, II, III) eine Düse enthält, die über eine Saugöffnung mit der Kondensatsammlung auf der Bodenseite des Schalldämpfergehäuses (5) verbunden ist, dadurch gekennzeichnet, daß wenigstens ein Rückführrohr (2) im wesentlichen parallel in der Nähe des aus dem Schalldämpfergehäuse (5) herausführenden bodenseitigen Teiles (3) des Abgasrohres angeordnet ist und daß das Rückführrohr in seiner Längsachse eine durchgehende Perforierungslinie (13) aufweist, die dem Bereich der wannenartigen Vertiefung (7) im bodenseitigen Teil des Schalldämpfergehäuses (5) derart zugewandt ist, daß ein Teil des zurückgeführten Gasstromes durch die Perforierungslinie (13) in Richtung des sich an den Saugöffnungen (6) angesammelten Kondensats aus dem Rückführrohr (2) austritt.

2. Abgasschalldämpfer nach Anspruch 1, dadurch gekennzeichnet, daß die in Längsrichtung verlaufende Perforierungslinie (13) des Rückführrohres (2) einen durchgehenden Schlitz aufweist.

3. Abgasschalldämpfer nach Anspruch 1 und 2, dadurch gekennzeichnet, daß die in Längsrichtung verlaufende Perforierungslinie (13) des Rückführrohres (2) aus einer Vielzahl von in Reihe angeordneten Perforationsbohrungen und/oder Perforationsschlitzen besteht.

4. Abgasschalldämpfer nach einem der Ansprüche 1 bis 3, dadurch gekennzeichnet, daß die Schalldämpferkammern (I, II und III) durch Schottwände (4) begrenzt sind, deren Bohrungen, durch die das Rückführrohr (2) geschoben wird, mit jeweils einer Haltenase (14) zur lagegerechten Fixierung der Perforierungslinie (13) versehen sind.

5. Abgasschalldämpfer nach einem der Ansprüche 1 bis 4, dadurch gekennzeichnet, daß der Abstand (1) zwischen dem Ende (15) des Rückführrohres und der diesem zugewandten, stirnseitig gelegenen Außenwand (10) des Schalldämpfergehäuses (5) variierbar ist.

## Revendications

1. Silencieux d'échappement comportant un tuyau d'échappement (1, 2, 3), qui est subdivisé en plusieurs éléments et traverse les chambres (I, II, III) situées dans le boîtier du silencieux, et dont la partie (1), qui débouche dans le boîtier (5) du silencieux est reliée, par l'intermédiaire d'une multiplicité de perçages, aux chambres (I, II, III) du silencieux et, par l'intermédiaire de son ouverture de sortie, à la chambre d'extrémité arrière (III), et dont la partie médiane (tube de renvoi 2) renvoie le courant du gaz depuis la chambre d'extrémité arrière (III) dans la chambre d'extrémité avant (I), et dont la partie (3), qui sort du boîtier du silencieux, contient, dans au moins une chambre (I, II, III) du silencieux, une buse, qui est reliée par l'intermédiaire d'une ouverture d'aspiration au condensat accumulé sur le fond du boîtier (5) du silencieux, caractérisé en ce qu'au moins un tube de renvoi (2) est disposé sensiblement parallèlement à proximité de la partie (3) du tuyau d'échappement, qui est située au niveau du fond et ressort du boîtier (5) du silencieux, et en ce que le tube de renvoi possède, sur son étendue en longueur, une ligne continue de perforations (13), qui est tournée vers la zone du renfoncement en forme de cuvette (7) dans la partie, située du côté du fond, du boîtier (5) du silencieux de telle sorte qu'une partie du courant renvoyé des gaz sort, par la ligne de perforations (13), hors du tube de renvoi (2), en direction du condensat accumulé au niveau des orifices d'aspiration (6).

2. Silencieux d'échappement selon la revendication 1, caractérisé en ce que la ligne de perforations (13), qui s'étend dans la direction longitudinale, du tube de renvoi (2) comporte une fente continue.

3. Silencieux d'échappement selon les revendications 1 et 2, caractérisé en ce que la ligne de perforations (13), qui s'étend dans la direction longitudinale, du tube de renvoi (2) est constituée par une multiplicité de perçages et/ou de fentes disposées en série et constituant les perforations.

4. Silencieux d'échappement selon l'une des revendications 1 à 3, caractérisé en ce que les chambres (I, II et III) du silencieux sont limitées par des cloisons étanches (4), dont les perçages à travers lesquels le tube de renvoi (2) est inséré, comportent respectivement un bec de retenue (14) servant à fixer la ligne de perforations (13) d'une manière correcte en position.

5. Silencieux d'échappement suivant l'une des revendications 1 à 4, caractérisé en ce que la distance (1) entre l'extrémité (15) du tube de renvoi et la paroi extérieure (10), tournée vers cette extrémité et montée frontalement, du boîtier (5) du silencieux est modifiable.

## Claims

1. An exhaust gas silencer with a multi-part exhaust pipe (1, 2, 3) passing through the silencer chambers (I, II, III) in the silencer housing, the part of the said exhaust pipe opening into the silencer housing (5) being connected to the silencer chambers (I, II, III) via a plurality of bores and to the rear end chamber (III) via its outlet, the central part of the said exhaust pipe (return pipe 2) diverting the gas stream from the rear end chamber (III) back into the front end chamber (I), and the part (3) of the exhaust pipe leading out of the silencer casing comprising a nozzle in at least one silencer chamber (I, II, III), which nozzle is connected to the condensate collection on the bottom side of the silencer casing (5) via an aspiration aperture, characterised in that at least one return pipe (2) is disposed substantially parallel near to the bottom side portion (3) of the exhaust pipe leading out of the silencer housing (5), and in that the return pipe has a continuous perforation line (13) in its longitudinal axis, which perforation line (13) faces the region of the basin-like hollow (7) in the bottom side portion of the silencer housing (5) in such a manner that some of the recycled gas stream is discharged from the return pipe (2) through the perforation line (13) in the direction of the condensate collected at the aspiration apertures (6).

2. An exhaust gas silencer according to claim 1, characterised in that the perforation line (13) extending in the longitudinal direction of the return pipe (2) has a continuous slot.

3. An exhaust gas silencer according to claim 1 and 2, characterised in that the perforation line (13) extending in the longitudinal direction of the return pipe (2) consists of a plurality of perforating bores and/or perforating slots arranged in a row.

4. An exhaust gas silencer according to one of claims 1 to 3, characterised in that the silencer chambers (I, II, III) are defined by partition walls (4), whose bores, through which the return pipe (2) is inserted, are provided with one supporting lug (14) in each case for fixing the perforation line (13) in place.

5. An exhaust gas silencer according to one of claims 1 to 4, characterised in that the distance (1) between the end (15) of the return pipe and the outer wall (10) of the silencer housing (5) facing the said return pipe and laid on its end face is variable.

FIG. 1

FIG. 2

FIG. 3